# EUROPÄISCHE PATENTSCHRIFT

(11) **EP 1 439 748 B1**
(45) Veröffentlichungstag und Bekanntmachung des Hinweises auf die Patenterteilung: **20.08.2008**
(21) Anmeldenummer: 02779189.6
(22) Anmeldetag: 30.10.2002
(51) Int. Cl.: A01G 13/02, E04G 1/14, E04G 21/28, A01G 9/22

(54) **WETTERSCHUTZVORRICHTUNG ZUM SCHUTZ VON NÄSSEEMPFINDLICHEN SONDERKULTUREN DES PFLANZENBAUS**
WEATHER PROTECTION DEVICE FOR THE PROTECTION OF SPECIAL PLANT CULTURES SENSITIVE TO MOISTURE
DISPOSITIF PERMETTANT DE PROTEGER CONTRE LES INTEMPERIES DES CULTURES VEGETALES SPECIALES SENSIBLES A L'HUMIDITE

(30) Priorität: 31.10.2001 DE 10153703
(43) Veröffentlichungstag der Anmeldung: 28.07.2004
(73) Patentinhaber: Vöhringer, Reinhard, 88276 Berg (DE)
(72) Erfinder: Vöhringer, Reinhard, 88276 Berg (DE)
(74) Vertreter: Dobler, Markus
(86) Internationale Anmeldenummer: PCT/DE2002/004043
(87) Internationale Veröffentlichungsnummer: WO 2003/037070

(56) Entgegenhaltungen:
- EP-A- 1 094 174
- DE-A- 3 504 133
- US-A- 4 068 404

## Beschreibung

Die Erfindung betrifft eine Wetterschutzvorrichtung zum Schutz von nässe- oder sonnenlichtempfindlichen Sonderkulturen des Pflanzenbaus nach dem Oberbegriff des Anspruchs 1.

### Stand der Technik

Beispielsweise können nässeempfindliche Sonderkulturen wie Kirschen, Aprikosen, Himbeeren, Erdbeeren, Trauben, u.s.w. durch Regen, der vor allem in den letzten Tagen vor der Ernte fällt, erheblich geschädigt werden. Hierbei nehmen z.B. Kirschen durch einen entsprechenden Regen so viel Wasser auf, dass sie platzen und somit nicht mehr als Tafelobst verkauft werden können. Dementsprechend sind in diesen Fällen erhebliche wirtschaftliche Verluste für die Landwirte die Folge.

Zur Vermeidung entsprechender wirtschaftlicher Einbußen durch die Zerstörung der Ernte aufgrund von Regen sind bereits vielfältige Wetterschutzvorrichtungen im Einsatz. Beispielsweise weisen herkömmliche Wetterschutzvorrichtungen Pfähle auf, an denen Spanndrähte derart gespannt sind, dass an diese Trageeinheit wie z.B. sogenannte Hagelschutznetze und/oder Folien, Planen oder dergleichen fixiert werden können. Insbesondere zum Schutz von Kirschbaumreihen werden die Hagelnetze bzw. Folien in Form von aneinandergereihten Satteldachkonstruktionen über den Pflanzenreihen angeordnet. Im Allgemeinen ist hierbei das Hagelnetz über vergleichsweise lange Zeiträume zum Schutz der Pflanzen vor Hagelschlag oberhalb der Pflanzen angebracht. Dagegen ist die biegeschlaffe Folie bzw. Plane lediglich wenige Tage vor der Ernte der Früchte oder dergleichen über den Pflanzen aufgespannt. Während der Zeit, in der die Pflanzen nicht vor Regen zu schützen sind, können die Folien bzw. Planen gegebenenfalls zusammengefaltet bzw. zusammengerollt und im Firstbereich der Schutzvorrichtung befestigt werden. Eine mit entsprechenden Regenschutzsystemen vergleichbare und gattungsbildende Pflanzenschutzvorrichtung ist beispielsweise aus der europäischen Patentschrift EP 07 71 140 B1 bekannt.

Nachteilig bei bisher bekannten Wetterschutzvorrichtungen ist jedoch, dass vergleichsweise starke Winde bzw. Windböen zur Beschädigung oder sogar Zerstörung der im aufgespannten Zustand relativ großflächigen, wind- und wasserdichten Schutzhaut bzw. der gesamten Wetterschutzvorrichtung führen kann. Hierdurch entstehen wiederum erhebliche finanzielle Schäden für die Landwirte. Darüber hinaus kann nach der Beschädigung bzw. Zerstörung der Schutzvorrichtung der Schutz der Pflanzen vor Einflüssen des Wetters nicht mehr gewährleistet werden.

### Aufgabe und Vorteile der Erfindung

Aufgabe der Erfindung ist es demgegenüber, eine Wetterschutzvorrichtung zum Schutz von nässe- oder sonnenlichtempfindlichen Sonderkulturen des Pflanzenbaus mit wenigstens einer weitgehend wasserdichten, an einer Trageeinheit fixierten Schutzhaut vorzuschlagen, die mit vergleichsweise geringem Aufwand einen wirkungsvollen Schutz vor allem der Pflanzen vor Einflüssen des Wetters auch über längere Zeiträume sicher gewährleistet.

Diese Aufgabe wird, ausgehend von einer Wetterschutzvorrichtung der einleitend genannten Art, durch die kennzeichnenden Merkmale des Anspruchs 1 gelöst.

Durch die in den Unteransprüchen genannten Maßnahmen sind vorteilhafte Ausführungen und Weiterbildungen der Erfindung möglich.

Dementsprechend zeichnet sich eine erfindungsgemäße Wetterschutzvorrichtung dadurch aus, dass die im Allgemeinen biegeschlaffe, flexible Schutzhaut wenigstens teilweise schwenkbar an der Trageeinheit zum Ausschwenken durch Windkraft aus einer Ruheposition fixiert ist, wobei eine Stützvorrichtung vorgesehen ist, die ein Netz, Geflecht nähbares Gitter und/oder Spannelemente, wie Spanndrähte, Spannschnüre umfasst und die als Auflage für die Schutzhaut ausgebildet sind.

Dies ist vor allem bei biegeschlaffen Folien, Planen, etc. ganz besonders von Vorteil, da diese in vielen Varianten handelsüblich und besonders wirtschaftlich günstig sind. Zudem werden diese bereits vielfach im Pflanzenbau, insbesondere in der Landwirtschaft eingesetzt.

Bei großflächigen Wetterschutzvorrichtungen im Pflanzenbau gemäß dem Stand der Technik wird durch aufwendige, konstruktive Maßnahmen versucht, die Schutzhaut bzw. biegeschlaffe Folie derart auszubilden, dass diese der Windkraft wiedersteht. Hierdurch entsteht einerseits ein erheblicher konstruktiver sowie finanzieller Aufwand und andererseits kann trotzdem ein sicherer Schutz gegenüber extremen Winden bzw. Windböen nicht gewährleistet werden. Im Gegensatz zum Stand der Technik ist die Schutzhaut gemäß der Erfindung derart auszubilden, dass diese im Wesentlichen über deren gesamte Fläche der Kraft des Windes in vorteilhafter Weise nachgibt, indem ab einem bestimmten Flächendruck wenigstens ein Bereich der Schutzhaut ausschwenkt und sich sozusagen in den Wind stellt. D.h. die Schutzhaut gibt dem Winddruck in ganz gezielter Weise nach, indem die Angriffsfläche der Schutzhaut für den Wind entscheidend reduziert wird. Hiermit ist die Schutzhaut weitestgehend vor nachteiligen Beeinträchtigungen bzw. Zerstörungen auch bei relativ großen Flächen geschützt.

Durch die vergleichsweise geringe Angriffsfläche der Schutzhaut sind lediglich vergleichsweise geringe Windkräfte durch die Schutzhaut bzw. die Wetterschutzvorrichtung aufzunehmen. Dementsprechend können relativ aufwendige konstruktive Maßnahmen zur Aufnahme extremer Windkräfte sowohl bezüglich der Schutzhaut als auch bezüglich der Trageeinheit weitestgehend entfallen, wodurch der konstruktive sowie finanzielle Aufwand bei Wetterschutzvorrichtungen gemäß der Erfindung gerade auch bei relativ großflächigen Anwendungen erheblich reduziert werden kann.

Durch das Ausschwenken der Schutzhaut mittels Windkraft ist eine entsprechende Beeinträchtigung bzw. Zerstörung nahezu sicher verhindert, aber gleichzeitig wird mit Hilfe der Schutzhaut in der Ruheposition die Beregnung der Sonderkulturen weitestgehend verhindert. Denn bei Regen treten zumindest in den gemäßigten Klimazonen im Allgemeinen lediglich geringe Winde auf.

Vorteilhafterweise wird insbesondere mittels des als Auflage der Schutzhaut ausgebildeten Netzes, Geflechts und/oder Gitters ermöglicht, dass die Schutzhaut in der Ruheposition, d.h. bei Windstille, nahezu vollflächig auf dem Netz, Geflecht und/oder Gitter aufliegt. Hierdurch wird einerseits die flächige Abstützung der Schutzhaut besonders einfach verwirklicht, so dass eine außerordentlich wirtschaftlich günstige Wetterschutzvorrichtung gerade auch für relativ großflächige Anwendungsfälle wie den Pflanzenbau realisierbar ist. Andererseits kann eine besonders dünnwandige, biegeschlaffe, schmiegsame, flexible, elastische bzw. formbare Schutzhaut, z.B. eine Kunststoff-Folie oder Plane, verwendet werden, ohne dass diese eine aufwendige Stützung oder dergleichen benötigt.

Darüber hinaus wird in vorteilhafter Weise mittels einer erfindungsgemäßen Schutzhaut eine zu starke Überhitzung des zu schützenden Bereichs der Wetterschutzvorrichtung wirkungsvoll vermieden. Eine relativ starke Erwärmung des zu schützenden Bereichs führt zu Konvektionsströmungen, d.h. zu thermischen Winden, die ebenfalls ein Ausschwenken der Schutzhaut gemäß der Erfindung zur Folge haben kann und somit eine vorteilhafte Belüftung der Wetterschutzvorrichtung realisierbar ist. Hierdurch werden nachteilige Beeinträchtigungen der zu schützenden Pflanzen bzw. Objekte aufgrund relativ hoher Temperaturen wirkungsvoll vermieden.

Weiterhin kann beispielsweise die Schutzhaut gemäß der Erfindung über mehrere Monate angebracht werden, ohne dass diese aufgrund von Windeinwirkung beschädigt wird. Im Pflanzenbau ist es hierdurch bei einer erfindungsgemäßen Wetterschutzvorrichtung von Vorteil, eine künstliche Beregnung zur Versorgung der zu schützenden Pflanzen mit Wasser vorzusehen. Beispielsweise erfolgt die Beregnung in einer Höhe über dem Boden von einigen Zentimetern, z.B. in ca. 10 bis 50cm, insbesondere 20cm.

Mit der Beregnung kann vorzugsweise ein relativ warmes Wasser, z.B. ca. 5° bis 15°C, insbesondere ca. 8°C, unterhalb der Schutzhaut eingebracht werden. Dies ermöglicht, dass das Beregnungswasser Wärme an den von der Wetterschutzvorrichtung gebildeten Innenraum abgibt und hierdurch die zu schützenden Pflanzen oder dergleichen vor nachteiligen tiefen Temperaturen bzw. Frost geschützt werden. Das bedeutet, dass die Wetterschutzvorrichtung mit einer Beregnungsanlage als Frostschutzvorrichtung, Heizeinheit bzw. Beheizung und/oder Klimatisierung der zu schützenden Pflanzen ausgebildet werden kann.

Weiterhin wird insbesondere aufgrund der sich nahezu ständig wenigstens leichten Bewegung der Schutzhaut und/oder des Netzes, Geflechts bzw. Gitters ein Schutz vor Vögeln und/oder Insekten realisiert. Vorzugsweise geht das Netz im Wesentlichen seitlich bis zum Boden. Für die Insektenschutzfunktion weist das Netz, Geflecht und/oder Gitter vergleichsweise kleine lichte Weiten bzw. Löcher auf, so dass gewöhnliche Insekten im Allgemeinen nicht durch das Netz, Geflecht und/oder Gitter hindurchkommen können. Vorteilhafterweise bei zu schützenden Obstbäumen, Beerenhecken, Trauben, Erdbeeren, u.s.w. werden Pflanzen schädigende Vögel und/oder Insekten wie Kirschfruchtfliegen oder dergleichen wirkungsvoll von einer Beeinträchtigung des Erntegutes abgehalten. Ein als Vogelschutz- und/oder Insektenschutz ausgebildete Wetterschutzvorrichtung gemäß der Erfindung gewährleistet einen besonders hohen Ertrag von den zu schützenden Pflanzen. Zudem kann dies als biologische Pflanzenschutzmaßnahme angesehen bzw. verwendet werden, was einen Einsatz von chemischen Pflanzenschutzmitteln oder dergleichen weitgehend ersetzen kann.

Grundsätzlich können z.B. Bienen bzw. Bienenkästen zur Befruchtung der zu schützenden Pflanzen in vorteilhafter Weise während deren Blütezeit zwischen diesen bzw. unterhalb der Schutzhaut und/oder innerhalb der erfindungsgemäßen Wetterschutzvorrichtung eingebracht werden.

Die zu schützenden Pflanzen bekommen aufgrund der erfindungsgemäßen Wetterschutzvorrichtung in vorteilhafter Weise nahezu keine feuchten bzw. nassen Blätter, so dass ein nachteiliger Befall der Pflanzen mit Pilzen oder dergleichen wirkungsvoll verhindert wird. Dementsprechend kann insbesondere auf einen Einsatz von Fungiziden weitestgehend verzichtet werden. Hierdurch wird wiederum ein biologischer Pflanzenschutz in vorteilhafter Weise verwirklicht, wodurch entsprechende chemische Maßnahmen entbehrlich werden.

Vorteilhafterweise ist die Schutzhaut derart ausgebildet, dass eine vorgebbare Mindestwindkraft zum Ausschwenken der Schutzhaut aus der Ruheposition erforderlich ist. Dies ist beispielsweise mit Dämpfungsmittel zur Dämpfung des Ausschwenkens und/oder mittels einer vorteilhaften Dimensionierung, insbesondere des Gewichtes, der auszuschwenkenden Schutzhaut realisierbar.

Generell kann in vorteilhafter Weise die Schutzhaut am Netz, Geflecht bzw. Gewebe und/oder Gitter fixiert bzw. angenäht oder angeklebt werden. Entsprechende Fixierungen können in besonders einfacher Weise gerade für großflächige Anwendungen realisiert werden, z.B. für einige Ar bzw. Hektar große Schutzhäute, die im Agrarbereich oder Forstbereich üblich sind.

Im Baubereich sind Wetterabdeckungen für zu Fassadenarbeiten aufgestellte Baugerüste bekannt, die einen an einer Regenrinne eines Gebäudes befestigten Tragrahmen aufweisen, wobei an dessen schmalseitigen Rahmenholme flächensteife Klappen befestigt sind (vgl. DE 199 50 978 A1, DE 100 13 545 A1). Aufgrund der Anforderungen und Verhältnisse im Baubereich müssen sowohl die Tragrahmen als auch die Klappen dieser Wetterabdeckungen besonders stabil bzw. steif ausgebildet werden, so dass die Klappen gemäß der erwähnten Druckschriften im Allgemeinen mehrlagig verwirklicht und zusätzlich mit Versteifungselementen ausgestattet sind.

Bei diesen Vorrichtungen ist jedoch von Nachteil, dass der Tragrahmen und die versteiften, insbesondere mehrlagigen Klappen sehr aufwendig und kostenintensiv bzw. zeitintensiv herzustellen sowie auf- und abzubauen sind. Hierdurch sind diese Wetterabdeckungen lediglich im Gerüstbau für kleinere Flächen wie für die Abdeckung der Baugerüste nach oben geeignet. Zumindest aufgrund der derzeitigen wirtschaftlichen Verhältnisse können entsprechend aufwendige und zahlreiche Holme oder dergleichen aufweisende Wetterabdeckungen im Pflanzenbau aus Kostengründen nicht eingesetzt werden.

Die EP 1 094 174 A beschreibt eine Wetterabdeckung für Fassenden mit einer flexiblen Folie, die auf einem stabilen und festen Tragrahmen befestigt ist.

In einer bevorzugten Variante der Erfindung ist die Schutzhaut wenigstens teilweise in der Art einer Windfahne ausgebildet. Hierdurch ist eine besonders einfache und kostengünstige Ausführungsform der Erfindung umsetzbar.

Vorteilhafterweise umfasst die Schutzhaut mehrere, wenigstens teilweise schwenkbare Schutzelemente. Beispielsweise kann mindestens ein Schutzelement pro Dachfläche und/oder Seitenfläche der Wetterschutzvorrichtung vorgesehen werden, sodass die Wetterschutzvorrichtung in beliebigen Formen, wie z.B. Schirm-, Pyramiden-, Kegel-, Halbkugelformen oder dergleichen, auszubilden und gegebenenfalls an die zu schützenden Objekte bzw. deren Form anpassbar ist.

Darüber hinaus kann in vorteilhafter Weise je eine Dach- bzw. Seitenfläche oder dergleichen mehrere, schwenkbare Schutzelemente gemäß der Erfindung umfassen. Hiermit wird ermöglicht, dass gegebenenfalls relativ große Flächen mit vergleichsweise einfach handhabbaren, kleinflächigen Schutzelementen erzeugt bzw. geschützt werden können. Gegebenenfalls können mittels der Verwendung mehrerer, schwenkbarer Schutzelemente gemäß der Erfindung zu schützende Flächen bzw. Bereiche von mehreren Hektar Größe realisiert werden, z.B. zum Schutz ganzer Plantagen oder dergleichen.

Vorteilhafterweise sind mehrere Schutzelemente jeweils wenigstens teilweise als Windfahne ausgebildet. Mit Hilfe dieser Maßnahme können relativ große Schutzflächen in besonders einfacher Weise gemäß der Erfindung ausgebildet werden.

In einer besonderen Weiterbildung der Erfindung sind die Schutzelemente überlappend angeordnet, d.h. dass eine flächige Überdeckung der Schutzelemente vorgesehen ist. Bevorzugt wird die Überlappung derart realisiert, dass ein in vertikaler Richtung oberhalb eines ersten Schutzelementes angeordnetes zweites Element auf der Außenseite das erste Schutzelemente flächig überdeckt. Hiermit wird ermöglicht, dass in der Ruheposition der Schutzhaut Regenwasser an der Außenseite der Schutzhaut abfließt und die unter der Wetterschutzvorrichtung angeordneten Objekte wirkungsvoll vor Regen geschützt sind. Andererseits wird mit dieser Maßnahme eine gleichbleibend vordefinierte Ruheposition durch eine Stützung bzw. Ausbildung eines Anschlags für das zweite Schutzelement mittels eines Abschnitts des ersten Schutzelements in vorteilhafter Weise realisiert.

In vorteilhafter Weise kann vor allem bei Verwendung von Folien, Planen oder dergleichen die Schutzhaut an unterschiedlichste Formen angepasst und zugleich schwenkbar ausgebildet werden. Beispielsweise kann eine flexible Schutzhaut sowohl bei nahezu planen Flächen als auch bei kegel-, zylinderförmigen Flächen oder Kugelabschnitten schwenkbar gemäß der Erfindung an der Trageeinheit fixiert werden.

In einer vorteilhaften Ausführungsform der Erfindung ist eine Länge ein Vielfaches einer Breite eines Schutzelementes. Beispielsweise ist ein Schutzelement und/oder das Netz, Gitter, Gewebe, Geflecht, etc. streifenförmig bzw, bahnförmig ausgebildet. Entsprechend schmale Schutzelemente und/oder Netze, Gitter, Gewebe, Geflechte, etc. können in vorteilhafter Weise längs der Längsachse bzw. Längskante insbesondere an der Trageinheit fixiert werden. Hierdurch wird eine vergleichsweise großflächige Fixierung geschaffen, die relativ große Haltekräften aufnehmen kann. Zudem kann hiermit eine vorteilhafte Anpassung an relativ große Anbauflächen entsprechender Pflanzen umgesetzt werden.

Darüber hinaus wird vor allem bei Verwendung einer flexiblen Schutzhaut mittels entsprechend längsseitig fixierter, vergleichsweise schmaler Schutzelemente eine Fehlpositionierung der Schutzhaut wirkungsvoll verhindert.

Möglicherweise ist jeweils eine Länge des Schutzelementes und/oder Netzes, Gitters, Gewebes, Geflechts, etc. um etwa 10 bis 1000 mal, vorzugsweise ca. 100 bis 500 mal, länger als deren Breite.

Gegebenenfalls verläuft eine Schwenklinie der Schutzhaut in nahezu vertikaler Richtung. In einer bevorzugten Weiterbildung der Erfindung verläuft wenigstens eine Schwenklinie der Schutzhaut im Wesentlichen horizontal. Beispielsweise kann lediglich eine nahezu horizontal verlaufende Schwenklinie der Schutzhaut bzw. der Schutzelemente vorgesehen werden, die gegebenenfalls mit einer oder mehrerer wenigstens teilweise vertikal verlaufender Schwenklinien kombiniert wird. Beispielsweise ist ein streifenförmiges Schwenkelement vorzugsweise in Längsrichtung weitgehend horizontal schwenkbar an der Trageinheit fixiert. Dies kann unter anderem bei Verwendung einer flexiblen Schutzhaut bzw. flexibler Schutzelemente gegebenenfalls zusätzlich in Querrichtung an der Trageeinheit fixiert werden. Hierbei ermöglicht die flexible Schutzhaut trotz der mehrfachen Fixierung ein teilweises Ausschwenken gemäß der Erfindung.

Vorzugsweise ist gemäß der Erfindung wenigstens eine Kante bzw. ein Randabschnitt der Schutzhaut bzw. der Schutzelemente lose an der Trageeinheit angeordnet, d.h. nicht an der Trageeinheit befestigt bzw. fixiert, so dass wenigstens diese Kante bzw. dieser Randabschnitt im Wind wehen kann.

In einer vorteilhaften Variante der Erfindung sind wenigstens Rückstellmittel zum Rückstellen der ausgeschwenkten Schutzhaut bzw. Schutzelemente in die Ruheposition vorgesehen. Entsprechende Rückstellmittel gewährleisten insbesondere in nahezu windstillen bzw. windarmen Phasen die Ausbildung einer weitestgehend geschlossenen Schutzhaut. D.h. die Schutzhaut ist für fallenden Regen und/oder gegebenenfalls direkt einfallende Sonnenstrahlung nahezu undurchlässig. Demzufolge kann lediglich bei vergleichsweise starken Winden, Regen und/oder Sonnenlicht auf die zu schützende Objekte, wie Kirschbäume, Himbeersträucher oder dergleichen fallen. Insbesondere bei Kirschen oder Ähnlichem ist eine relativ kurzzeitige bzw. geringe Benetzung mit Regenwasser unerheblich.

Darüber hinaus wird gemäß der Erfindung ermöglicht, dass vergleichsweise sonnenlichtempfindliche Objekte bzw. Kulturen des Pflanzenbaus vor allem wirkungsvoll gegen zu starke Einstrahlung von Sonnenlicht auch langfristig geschützt werden und gleichzeitig eine Beschädigung der Schutzhaut durch relativ starken Wind wirkungsvoll verhindert wird.

Generell kann die Schwenklinie der Schutzhaut bzw. der Schutzelemente in einem mittleren Abschnitt dieser vorgesehen werden. Vorzugsweise ist die Schwenklinie an einem Randbereich der Schutzhaut und/oder der Schutzelemente angeordnet. Gegebenenfalls klappen bzw. schwenken die Schutzelemente bzw. Schutzhaut bis zu einem Anschlagelement der Trageeinheit nahezu selbsttätig in die Ruheposition zurück. Vor allem mit Hilfe der im Randbereich angeordneten Schwenklinie wird erreicht, dass die Schutzhaut bzw. die Schutzelemente vorteilhafterweise selbsttätig aufgrund der Schwerkraft zurückschwenken und somit zugleich als Rückstellmittel wirken bzw. realisiert sind. Dies ermöglicht eine besonders einfache Realisierung und somit kostengünstige Ausführungsform der Erfindung.

Alternativ oder in Kombination hierzu umfassen die Rückstellmittel wenigstens ein Fixierelement zum zusätzlichen Fixieren der Schutzhaut an der Trageeinheit. Beispielsweise kann als Fixierelement ein elastisches Rückstellelement wie ein GummiFederelement oder dergleichen verwendet werden.

Darüber hinaus kann vor allem bei Verwendung einer flexiblen Schutzhaut eine nahezu unelastische Fixierung an der Trageeinheit vorgesehen werden.

In bevorzugter Weise umfasst die Trageeinheit eine an wenigstens einem Trageelement angeordnete Stützvorrichtung zum Stützen der Schutzhaut. Beispielsweise kann das Trageelement als Pfosten, Pfahl oder dergleichen verwirklicht werden, an dem eine entsprechende Stützvorrichtung zum Stützen der Schutzhaut angeordnet ist. Das Trageelement ist derart auszubilden, dass die zu schützenden Objekte, wie beispielsweise Kirschbäume, in vorteilhafter Weise unter der Schutzhaut bzw. innerhalb des zu schützenden Bereichs angeordnet werden können. Die Stützvorrichtung ermöglicht insbesondere eine vorteilhafte Abstützung bzw. Festlegung der Ruheposition der Schutzhaut.

Erfindungagemäß weist die Stützvorrichtung wenigstens das Netz, Geflecht, Gitter und/oder Spannelemente auf. Die Stützvorrichtung ist als die Auflage für die Schutzhaut ausgebildet. Beispielsweise kann die Stützvorrichtung als das bereits vielfach vorhandene Hagelschutznetz, das mittels Spanndrähten, Spannschnüren oder dergleichen an Pfähle, Pfosten, usw. fixiert bzw. verspannt ist, ausgebildet werden. Entsprechende Hagelschutznetze sind gegenüber bisherigen Regenschutzvorrichtungen gemäß dem Stand der Technik mit deutlich geringeren Kosten zu realisieren und bei entsprechenden Sonderkulturen des Pflanzenbaus weit verbreitet. Durch die Verwendung der vorhandenen Hagelschutzsysteme als Stützvorrichtung und Trageeinheit für die Schutzhaut gemäß der Erfindung wird eine besonders wirtschaftlich günstige Ausführungsform realisierbar.

In einer vorteilhaften Ausführungsform der Erfindung ist die Schutzhaut wenigstens teilweise an der Stützvorrichtung mit einem Faden, Garn, Seil und/oder Draht fixiert. Insbesondere die Fixierung mittels einem Nähverfahren unter Zuhilfenahme eines entsprechenden Fadens bzw. Garns oder dergleichen ermöglicht beispielsweise bei Verwendung von vergleichsweise schmalen, streifenförmigen Schutzelementen vor allem in Längsrichtung der Schutzhaut bzw. der Schutzelemente eine besonders vorteilhafte und leicht zu realisierende Fixierung an der Trageeinheit.

Darüber hinaus kann die Schutzhaut bzw. können die Schutzelemente vorteilhaft mittels Klebe-, Kunststoff-Schweiß-, Niet-, Heft-, Klammerverfahren oder dergleichen an der Trageeinheit entsprechend fixiert werden.

Vorteilhafterweise besteht die Schutzhaut wenigstens teilweise aus lichtdurchlässigem Material, wie z.B. eine nahezu durchsichtige Kunststofffolie oder dergleichen. Mit Hilfe dieser Maßnahme wird ermöglicht, dass die Schutzhaut über vergleichsweise lange Zeiträume ohne nachteilige Abschattung der Pflanzen oder dergleichen an der Trageeinheit gemäß der Erfindung fixierbar ist. D.h., dass beispielsweise Kirschen, Himbeeren oder dergleichen auch über längere Zeiträume wie mehrere Wochen oder Monate vorteilhafterweise zur weiteren Reife mit Sonnenlicht beschienen werden, ohne dass der Schutz gegenüber nachteiligem Regen verringert wird.

Vorzugsweise wird eine nahezu durchsichtige Schutzhaut bzw. Kunststofffolie verwendet, die ein Versteifungsmittel bzw. eine Einlage zur Versteifung aufweist. Das Versteifungsmittel bzw. die Einlage kann beispielsweise als Gewebe oder dergleichen ausgebildet werden, so dass bereits handelsübliche Kunststofffolien als Schutzhaut gemäß der Erfindung einsetzbar sind.

Darüber hinaus ist denkbar, dass als Material für die Schutzhaut ein Material mit Filterwirkung für spezielle Strahlungsbereiche des Sonnenlichts, wie UV-Anteile oder dergleichen, verwendbar ist. Möglicherweise wird ein Material verwendet, das nachteilige UV-Strahlung in vorteilhafte IR- bzw. Wärmestrahlung umwandelt. Mit Hilfe dieser Maßnahme wird das Pflanzenwachstum, insbesondere die Photosynthese in vorteilhafter Weise beeinflussbar. Zudem kann hiermit der in den letzten und wahrscheinlich nächsten Jahren stattfindenden Zunahme des UV-Anteils des Sonnenlichts aufgrund einer ausgedünnten Ozonschicht wirkungsvoll gegengesteuert werden, was entsprechende Schädigungen der Pflanzen verringert bzw. vollständig verhindert.

Weiterhin kann in vorteilhafter Weise UV-beständiges Material als Schutzhaut vorgesehen werden, so dass insbesondere die Lebensdauer der Schutzhaut gegebenenfalls über mehrere Jahre reicht.

In einer besonderen Weiterbildung der Erfindung weist die Schutzhaut und/oder das Netz, Gewebe bzw. Gitter eine Umkantung bzw. einen umgenähten Seitenstreifen auf. Vorzugsweise ist die Umkantung bzw. der Seitenstreifen wenigstens an der der Schwenklinie gegenüberliegenden Seite der Schutzhaut angeordnet. Hierdurch wird sowohl eine Versteifung der Schutzhaut als auch eine Erhöhung des Gewichts der Schutzhaut erreicht, was das Ausschwenken bzw. Zurückstellen der Schutzhaut weiter verbessert. Die Umkantung des Netzes, Gewebes, etc. kann insbesondere bei Nähverfahren die Funktion einer Randverstärkung bzw. Einfassung verwirklichen.

In einer vorteilhaften Ausführungsform der Erfindung ist die Schutzhaut, gegebenenfalls ausschließlich, als Dach ausgebildet. Gerade für die Anwendung im Pflanzenbau ist lediglich die Anordnung der Schutzhaut im Dachbereich der Wetterschutzvorrichtung ausreichend, um den Schutz vor Regen zu gewährleisten. Durch den Verzicht von mit Schutzhaut bedeckten Seitenflächen der Wetterschutzvorrichtung reduziert sich der konstruktive und somit auch der finanzielle Aufwand zur Ausbildung einer erfindungsgemäßen Wetterschutzvorrichtung.

In einer besonderen Weiterbildung der Erfindung wird wenigstens ein Wetterschutz-Streifen vorgesehen, der aus einem an einem Netz-, Gewebe- bzw. Gitterstreifen fixierten Schutzhautstreifen besteht. Vorzugsweise erfolgt die Fixierung mittels einem Nähverfahren oder dergleichen. Entsprechende Wetterschutz-Streifen werden miteinander fixiert bzw. vernäht, so dass eine Wetterschutzvorrichtung mehrere Wetterschutz-Streifen umfasst.

Die Fixierung bzw. Vernähung erfolgt in vorteilhafter Weise derart, dass die einzelnen Wetterschutz-Streifen an der Seite mit der Fixierung bzw. Naht mit dem Netz-, Gewebe- bzw. Gitterstreifen des benachbarten Wetterschutz-Streifens fixiert bzw. vernäht werden. Vorzugsweise erfolgt dies darüber hinaus derart, dass eine Überlappung der einzelnen Schutzhautstreifen verwirklicht wird. D.h. die untere Längskante eines Streifens überlappt die obere Längskante des darauffolgenden tieferliegenden Schutzhautstreifens. Zum Beispiel weist der Netz-, Gewebe- bzw. Gitterstreifen hierfür in z.B. vernähtem Zustand eine geringere Ausdehnung bzw. Breite auf als die des entsprechenden Schutzhautstreifens.

Der Netz-, Gewebe- bzw. Gitterstreifen kann aber auch eine größere Ausdehnung bzw. Breite als die des entsprechenden Schutzhautstreifens in fixiertem Zustand aufweisen, so dass ein regenwasserdurchlässiger Bereich erzeugt wird, bei dem in der Regel lediglich das Netz-, Gewebe- bzw. Gitter vorhanden ist. Ein entsprechender Bereich kann unter anderem an einem Randbereich der Wetterschutzvorrichtung bzw. insbesondere bei satteldachförmig ausgebildeten Wetterschutzvorrichtung oder dergleichen in einem mittleren bzw. tiefliegenden Bereich vorgesehen werden. Vor allem im letztgenannten Fall wird hierdurch in vorteilhafter Weise ein Abflussbereich für das Regenwasser realisiert, so dass dies besonders einfach und störungsfrei abließen kann und somit keine Stauung des Wassers auf der Schutzhaut entsteht.

Vorzugsweise ist der Abflussbereich zwischen den zu schützenden Pflanzen, Pflanzenreihen bzw. Gegenstände angeordnet. Hierdurch werden z.B. die Blätter bzw. Früchte im Allgemeinen nicht nass und zugleich wird den Wurzeln der zu schützenden Pflanzen Regenwasser zugeleitet, so dass gegebenenfalls eine künstliche Beregnung entfallen oder reduziert werden kann. Weiterhin kann durch diese Maßnahme direktes Sonnenlicht dosiert unter die Schutzhaut bzw. zu den Pflanzen gelangen.

In einer vorteilhaften Ausführungsform der Erfindung weist die Wetterschutzvorrichtung wenigstens einen Wetterschutzstreifen auf, der an zwei gegenüberliegenden Seiten, insbesondere Längsseiten fixiert bzw. vernäht ist. Die zwei anderen Seiten, insbesondere kurzen Seiten werden hierbei normalerweise nicht fixiert bzw. vernäht. Günstigerweise ist ein am Rand, insbesondere am oberen Rand angeordneter Wetterschutzstreifen entsprechend ausgebildet. Gegebenenfalls ist dessen Ausdehnung bzw. Breite kleiner als die der restlichen bzw. durchschnittlichen Wetterschutz-Streifen, so dass dessen Angriffsfläche für den Wind vergleichsweise klein ist. Lediglich einseitig fixierte Schutzhautstreifen können ansonsten gegebenenfalls vollständig über einen Randbereich, z.B. die Firstkante einer dachförmigen Wetterschutzvorrichtung, hinaus umklappen, d.h. über 180 Grad hinaus, so dass möglicherweise ein selbsttätiges Zurückschwenken in die Ruheposition nicht mehr gewährleistet ist. Die zweite, zu einem einseitig fixierten Schutzhautstreifen angrenzende Fixierung des zweiseitig fixierten Schutzhautstreifens am Netz, etc. erfolgt vorzugsweise durch das Anbringen des benachbarten angrenzenden Wetterschutz-Streifens.

Generell ist denkbar, dass eine Schutzhaut, die wenigstens teilweise schwenkbar an einer Trageinheit zum Ausschwenken durch Windkraft aus einer Ruheposition fixiert ist, gemäß der Erfindung auch in vorteilhafter Weise für Sonnenschirme, Zelte, Pavillons oder sonstige Schutzdächer verwendet werden kann. Gegebenenfalls kann eine erfindungsgemäße Schutzhaut auch im Baubereich insbesondere zur Herstellung von Stallungen für Tiere, Verkleidung von Baugerüsten, etc. verwendet werden. Hierbei kann die Schutzhaut neben dem Dachbereich auch an wenigstens einer oder an mehreren Seiten des entsprechenden Gebäudes, Gerüstes oder dergleichen vorteilhaft angeordnet werden.

### Ausführungsbeispiel

Ein Ausführungsbeispiel der Erfindung ist in der Zeichnung dargestellt und wird anhand der Figuren nachfolgend näher erläutert.

Im Einzelnen zeigen:
- Figur 1: eine perspektivische Schemadarstellung einer erfindungsgemäßen Wetterschutzvorrichtung in einer Regen- bzw. Ruhephase und
- Figur 2: eine perspektivische Schemadarstellung der erfindungsgemäßen Wetterschutzvorrichtung in einer Wind- bzw. Thermikphase.

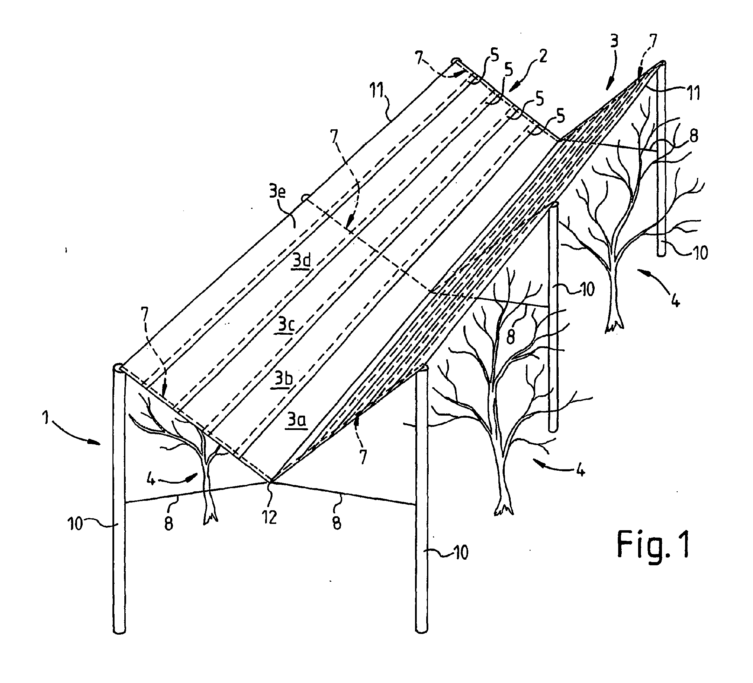

In Figur 1 ist eine erfindungsgemäße Wetterschutzvorrichtung mit einer Trageeinheit 1 und einer Schutzhaut 2 schematisch dargestellt. Die Schutzhaut 2 besteht aus mehreren Bahnen 3a, b, c, d, e, die im Wesentlichen längs einer Reihe aus Pflanzen 4 ausgerichtet sind.

Die Bahnen 3a, b, c, d, e weisen jeweils eine Überlappung 5 auf. Gemäß Figur 1 ist die nicht sichtbare obere Kante der innenliegenden Bahn 3 als Strichlinie dargestellt und die untere Kante der oberen Bahn 3, die auf der Außenseite der unteren Bahn 3 diese teilweise überlappt, als durchgezogene Linie schematisch dargestellt.

Die Bahnen 3a, b, c, d, e sind im Randbereich der gestrichelten bzw. in vertikaler Richtung betrachteten oberen Kante der Bahn 3 vorzugsweise mittels einer Naht, Klebung oder dergleichen an Spanndrähten 11 bzw. an einer in Figur 1 nicht näher dargestellten Stützvorrichtung fixiert. Aus Gründen der Übersichtlichkeit ist diese Fixierung nicht dargestellt. Gegebenenfalls kann jede Bahn 3 an einem separaten Spanndraht fixiert werden.

Die Schutzhaut 2 bzw. die Bahnen 3 sind aus einer flexiblen Folie oder dergleichen hergestellt, so dass mittels der zuvor beschriebenen Fixierung ein Schwenken der Schutzhaut 2 bzw. der Bahnen 3 um einen weitgehend horizontal ausgerichteten Schwenkbereich bzw. eine entsprechende Schwenklinie ermöglicht wird.

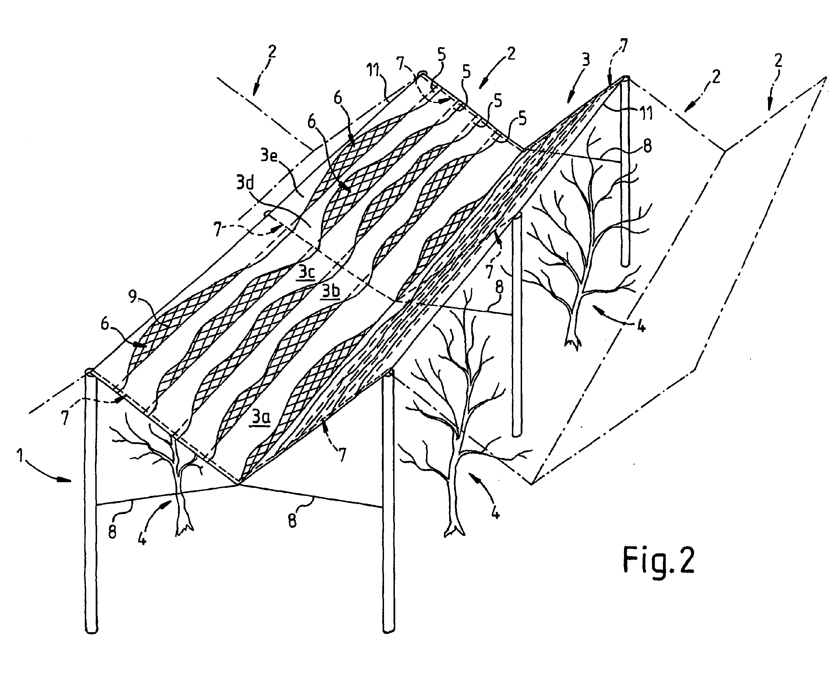

In Figur 2 ist die Wetterschutzvorrichtung gemäß Figur 1 in einer Wind- bzw. Thermikphase dargestellt. Hierbei wird verdeutlicht, dass durch Windeinwirkung bzw. ein durch thermische Strömungen erzeugter Wind die Schutzhaut 2 bzw. die Bahnen 3a, b, c, d, e längs der zuvor erläuterten Schwenklinie um den oberen Randbereich der Schutzhaut 2 bzw. Bahnen 3 schwenkt.

In der teilweisen ausgeschwenkten Position gemäß Figur 2 werden Öffnungen 6 in der Schutzhaut 2 erzeugt, so dass atmosphärische Luft durch die Schutzhaut 2 durchströmen kann. Hierdurch wird insbesondere die effektive Angriffsfläche der Schutzhaut 2 für den Wind bzw. strömende atmosphärische Luft entscheidend reduziert, so dass die Schutzhaut 2 unter Windeinwirkung bzw. bei Sturm nicht nachteilig beeinträchtigt bzw. zerrissen oder sogar vollständig zerstört wird.

Dies steht insbesondere im Gegensatz zum Stand der Technik, wobei entsprechende Wetterschutzvorrichtungen eine durchgehende Folie oder dergleichen als Schutzhaut aufweisen und diese den Windkräften durch vergleichsweise aufwendige, möglichst stabile und vielfach abgespannte Schutzhäute den Windkräften trotzen bzw. widerstehen wollen. Bei Schutzhäuten gemäß dem Stand der Technik zeigt die Erfahrung, dass vergleichsweise starke Stürme bzw. Windböen diese zerstören, so dass beispielsweise dem Landwirt ein erheblicher finanzieller Schaden sowohl bezüglich dem zerstörten Schutzsystem als auch der gegebenenfalls zerstörten Kirschen oder dergleichen entsteht.

Durch die erfindungsgemäße Verwendung einer vergleichsweise einfachen, kostengünstigen, flexiblen Schutzhaut 2 bzw. Bahnen 3 wird eine Wetterschutzvorrichtung realisierbar, die gegenüber dem Stand der Technik sowohl mit geringem konstruktiven als auch finanziellen Aufwand realisierbar ist.

Die in Figur 1 dargestellte Ruheposition der Schutzhaut 2 bzw. der Bahnen 3 gewährleistet insbesondere aufgrund der Überlappung 5, dass auf die Wetterschutzvorrichtung fallender Regen entlang der Schutzhaut 2 bzw. gegebenenfalls von der Bahn 3e über die Bahn 3d, usw. bis zur Bahn 3a abfließt und gegebenenfalls zwischen den Pflanzen 4 auf den Boden abtropft bzw. abfließt. Alternativ hierzu kann beispielsweise die Bahn 3a mit der daran benachbarten, nicht näher bezeichneten Bahn 3 der gegenüberliegenden Dachfläche weitgehend durchgängig verbunden sein, so dass diese eine Art Regenrinne ausbilden, wodurch mittels entsprechend vorteilhafter Abspannung 8 die Regenrinne der Schutzhaut 2 ein Gefälle aufweist und Regenwasser entsprechend abfließen kann.

Weiterhin ist zur Abspannung der Schutzhaut 2 im Firstbereich des durch die Schutzhaut 2 gebildeten Satteldaches ein Spanndraht 11 gemäß Figur 1 vorgesehen. Zudem können ein weiterer Spanndraht 12 sowie in nicht näher dargestellter Weise im Bereich der Fixierungen 7 vorgesehene Spanndrähte zum Abspannen der Schutzhaut 2 angeordnet werden. Vorteilhafterweise wird beispielsweise ein Hagelnetz 9 an den Spanndrähten 11 und 12 abgespannt und an diesem wiederum die Schutzhaut 2 bzw. die Bahnen 3 fixiert.

Insbesondere mit Hilfe der Abspannung 8 bzw. den Spanndrähten 11, 12 wird die Schutzhaut 2 satteldachförmig über den Pflanzen 4 ausgebildet. In Figur 2 ist als Strichpunktdarstellung eine Weiterführung der Wetterschutzvorrichtung gemäß der Erfindung angedeutet.

Hierbei ist in nicht näher dargestellter Weise je ein Satteldach über einer Pflanzenreihe angeordnet. Gemäß der Erfindung können sich zahlreiche Satteldächer über die Gesamtfläche einer entsprechenden Kirschbaumplantage oder dergleichen erstrecken. Weiterhin kann die Wetterschutzvorrichtung in Längsrichtung entsprechend verlängert werden, so dass eine Pflanzenreihe zahlreiche Pflanzen 4 umfasst.

Darüber hinaus ist der Figur 2 eine zusätzliche Fixierung 7 zu entnehmen, die ein vollständiges Umklappen der Schutzhaut 2 bzw. der Bahnen 3 weitestgehend verhindert, so dass diese aufgrund des Eigengewichts bei vergleichsweise windarmen Phasen bzw. bei Windstille sicher wieder zurück in eine Ruheposition gemäß Figur 1 zurückschwenken.

Weiterhin ist Figur 2 zu entnehmen, dass die Schutzhaut 2 bzw. die Bahnen 3 auf einem Hagelnetz 9 aufliegen bzw. von diesem gestützt werden. In einer besonderen Variante der Erfindung wird ein vielfach gebräuchliches Hagelschutzsystem einschließlich dem Hagelnetz 9 verwendet, wobei auf das Hagelnetz 9 die Bahnen 3 bzw. die Schutzhaut 2 vorzugsweise längs deren oberen Randbereiche angenäht bzw. angeklebt oder in vergleichbarer Weise fixiert werden. Ebenso kann die Fixierung 7 entsprechend realisiert werden. Demzufolge ist das Wetterschutzsystem gemäß der Erfindung lediglich mit relativ geringem zusätzlichen Aufwand an bereits vielfach verwendeten Hagelschutzsystemen anzubringen.

Beispielsweise kann ein Pfahl 10 eine lichte Höhe von ca. 4 m aufweisen, so dass derzeit gebräuchliche Kirschbäume 4 unter der Schutzhaut 2 gemäß der Erfindung anzuordnen sind. Die Fixierungen 7 sind beispielsweise mehrere Meter, gegebenenfalls ca. 10 m voneinander beabstandet. Die Länge der Bahnen 3 ist vor allem an die Länge der Pflanzenreihen angepasst und kann möglicherweise über 100 m betragen. Die Breite der Bahnen 3 beträgt vorzugsweise mehrere Dutzend Zentimeter, z.B. ca. 30 cm bis 1 m. Bei der Überlappung 5 sind lediglich wenige Zentimeter, insbesondere ca. 5 bis 10 cm, von Vorteil.

Generell sind auch Wetterschutzvorrichtungen denkbar, die beispielsweise als Zelt, Sonnen- bzw. Regenschirm, Pavillon oder dergleichen gemäß der Erfindung mit einer wenigstens teilweise schwenkbaren Schutzhaut 2 bzw. Bahnen 3 ausgebildet sind. Beispielsweise sind bei schirmförmigen Wetterschutzvorrichtungen die Bahnen 3 vor allem als kegelstumpfförmige Ringe auszubilden, die vorzugsweise aus flexiblem Material bestehen.

In einer besonders einfachen Variante der Trageinheit 1 weist diese im Allgemeinen lediglich Pfähle 10 bzw. Stangen 10 mit den Spanndrähten 11 bzw. Spannseilen 11 auf. Das heißt, dass die Abspannung 8 und der Spanndraht 12 entfallen kann. Bei dieser Variante der Erfindung kann die komplette Schutzhaut 2 zusammen mit dem Hagelnetz 9 nahezu frei zwischen den Pflanzen bzw. Pflanzreihen hängen und weitestgehend frei im Wind wehen bzw. von diesem bewegt werden. Hierdurch wird der Aufwand zur Realisierung der Erfindung weitestgehend verringert, ohne dass die vorteilhafte Funktionsweise beeinträchtigt wird.

Generell können Pfähle 10 bzw. Stangen 10 aus z.B. Holz, Kunststoff, Metall, insbesondere Aluminium oder Stahl, und/oder Stahl-Beton verwendet werden. Möglicherweise werden diese unmittelbar in den Boden eingebracht. Alternativ hierzu können die Pfähle 10 bzw. Stangen 10 auch in in den Boden eingelassene Hülsen oder dergleichen eingebracht werden, so dass ein Schutz vor Bodennässe bzw. verwitterung im Bodenbereich der Pfähle 10 bzw. Stangen 10 verwirklicht wird. Weiterhin ist hierdurch ein relativ einfaches Auf- und Abbauen der Wetterschutzvorrichtung gemäß der Erfindung realisierbar.

Grundsätzlich kann eine Wetterschutzvorrichtung gemäß der Erfindung außer zum Schutz von nässe- oder sonnenlichtempfindlichen Sonderkulturen 4 des Pflanzenbaus insbesondere auch zum Schutz von Gebäuden bzw. sonstiger verwitterungsempfindlicher Gegenstände, Fassadenarbeiten auf Baugerüsten und/oder von Tieren vor Nässe oder Sonnenlicht verwendet werden. Möglicherweise wird der zu schützende Gegenstand als Bestandteil der Trageeinheit verwendet, was den Aufwand zur Realisierung der Wetterschutzvorrichtung gemäß der Erfindung weiter verringert.

### Bezugszeichenliste:

- 1: Trageeinheit
- 2: Schutzhaut
- 3: Bahn
- 4: Pflanze
- 5: Überlappung
- 6: Öffnung
- 7: Fixierung
- 8: Abspannung
- 9: Hagelnetz
- 10: Pfahl
- 11: Spanndraht
- 12: Spanndraht

## Patentansprüche

1. Wetterschutzvorrichtung zum Schutz von nässe- oder sonnenlichtempfindlichen Sonderkulturen (4) des Pflanzenbaus mit wenigstens einer weitgehend wasserdichten, an einer Trageinheit (1, 8, 9, 10, 11, 12) fixierten Schutzhaut (2), wobei die Schutzhaut (2, 3) biegeschlaff ist und wenigstens teilweise schwenkbar an der Trageeinheit (1, 8, 9, 10, 11, 12) zum Ausschwenken durch Windkraft aus einer Ruheposition fixiert ist, **dadurch gekennzeichnet, dass** eine Stützvorrichtung vorgesehen ist, die ein Netz (9), Geflecht, nähbares Gitter und/oder Spannelemente wie Spanndrähte, Spannschnüre umfasst und die als Auflage für die Schutzhaut ausgebildet sind.

2. Vorrichtung nach Anspruch 1, **dadurch gekennzeichnet, dass** die Schutzhaut (2) am Netz (9), Geflecht und/oder Gitter fixiert ist, z.B. angenäht oder angeklebt ist.

3. Vorrichtung nach einem der vorgenannten Ansprüche, **dadurch gekennzeichnet, dass** die Schutzhaut (2) wenigstens teilweise in der Art einer Windfahne ausgebildet ist.

4. Vorrichtung nach einem der vorgenannten Ansprüche, **dadurch gekennzeichnet, dass** die Schutzhaut (2) mehrere, wenigstens teilweise schwenkbare Schutzelemente (3) umfasst.

5. Vorrichtung nach einem der vorgenannten Ansprüche, **dadurch gekennzeichnet, dass** mehrere Schutzelemente (3) jeweils wenigstens teilweise als Windfahne ausgebildet sind.

6. Vorrichtung nach einem der vorgenannten Ansprüche, **dadurch gekennzeichnet, dass** die Schutzelemente (3) überlappend angeordnet sind.

7. Vorrichtung nach einem der vorgenannten Ansprüche, **dadurch gekennzeichnet, dass** eine Länge ein Vielfaches einer Breite eines Schutzelementes (3) ist.

8. Vorrichtung nach einem der vorgenannten Ansprüche, **dadurch gekennzeichnet, dass** die Schutzhaut (2, 3) und/oder das Netz (9), Geflecht und/oder Gitter im Wesentlichen bahnförmig ist.

9. Vorrichtung nach einem der vorgenannten Ansprüche, **dadurch gekennzeichnet, dass** wenigstens eine Längskante der Schutzhaut (2, 3) bzw. der Bahn (3) am Netz (9), Geflecht und/oder Gitter fixiert ist.

10. Vorrichtung nach einem der vorgenannten Ansprüche, **dadurch gekennzeichnet, dass** wenigstens eine Schwenklinie der Schutzhaut (2) im Wesentlichen horizontal verläuft.

11. Vorrichtung nach einem der vorgenannten Ansprüche, **dadurch gekennzeichnet, dass** Rückstellmittel (7) zum Rückstellen der ausgeschwenkten Schutzhaut (2, 3) in die Ruheposition vorgesehen sind.

12. Vorrichtung nach einem der vorgenannten Ansprüche, **dadurch gekennzeichnet, dass** die Schwenklinie an einem Randbereich der Schutzhaut (2, 3) bzw. der Schutzelemente (3) angeordnet ist.

13. Vorrichtung nach einem der vorgenannten Ansprüche, **dadurch gekennzeichnet, dass** die Rückstellmittel (7) wenigstens ein Fixierelement (7) zum zusätzlichen Fixieren der Schutzhaut (2, 3) an der Trageeinheit (1, 8, 9, 10, 11, 12) umfassen.

14. Vorrichtung nach einem der vorgenannten Ansprüche, **dadurch gekennzeichnet, dass** die Trageeinheit (1, 8, 9, 10, 11, 12) eine an wenigstens einem Trageelement (10) angeordnete Stützvorrichtung (8, 9, 11, 12) zum Stützen der Schutzhaut (2, 3) umfasst.

15. Vorrichtung nach einem der vorgenannten Ansprüche, **dadurch gekennzeichnet, dass** die Schutzhaut (2, 3) wenigstens teilweise an der Stützvorrichtung (8, 9, 11, 12) mit einem Faden (7), Garn, Seil und/oder Draht fixiert ist.

16. Vorrichtung nach einem der vorgenannten Ansprüche, **dadurch gekennzeichnet, dass** die Schutzhaut (2, 3) wenigstens teilweise aus lichtdurchlässigem Material besteht.

17. Vorrichtung nach einem der vorgenannten Ansprüche, **dadurch gekennzeichnet, dass** die Schutzhaut (2, 3) dachförmig ausgebildet ist.

18. Verfahren zur Herstellung einer Vorrichtung nach einem der vorgenannten Ansprüche, **dadurch gekennzeichnet, dass** auf einer ersten Auflage, bestehend aus einem Netz (9), Geflecht, nähbaren Gitter und/oder Spannelementen wie Spanndrähte, Spannschnüre ein erstes biegeschlaffes Schutzelement (3) fixiert und anschließend die erste Auflage an einer ein zweites biegeschlaffes Schutzelement (3) umfassenden zweiten Auflage, bestehend aus einem Netz (9), Geflecht, nähbaren Gitter und/oder Spannelementen wie Spanndrähte, Spannschnüre, fixiert wird, so dass die Schutzelemente schwenkbar zum Ausschwenken durch Windkraft aus einer Ruheposition an der jeweiligen Auflage fixiert sind.

19. Verfahren nach Anspruch 18, **dadurch gekennzeichnet, dass** wenigstens die erste Auflage (9) am ersten Schutzelement (3) und die zweite Auflage (9) am zweiten Schutzelement (3) und/oder eine Auflage (9) mit Schutzelement (3) an einer anderen Auflage (9) mit Schutzelement (3) angenäht wird.

## Claims

1. Weather protection device for protecting special cultures (4) of plants which are sensitive to wetness or sunlight with at least one largely watertight protective skin (2) fixed to a support unit (1, 8, 9, 10, 11, 12), wherein the protective skin (2, 3) is untensioned and is fixed to be at least partly pivotable on the support unit (1, 8, 9, 10, 11, 12) so that it can swing out from a position of rest as a result of wind power, **characterised in that** a support device is provided which comprises a net (9), weave, stitchable lattice and/or tightening elements such as tightening wires, tightening laces and which is designed as a support for the protective skin.

2. Device according to claim 1, **characterised in that** the protective skin (2) is fixed onto the net (9), weave and/or lattice, e.g. stitched or adhered.

3. Device according to one of the preceding claims, **characterised in that** the protective skin (2) is designed at least partly in the form of a wind flag.

4. Device according to one of the preceding claims, **characterised in that** the protective skin (2) comprises at least partly pivotable protective elements (3).

5. Device according to one of the preceding claims, **characterised in that** several protective elements (3) are designed at least partly as a wind flag.

6. Device according to one of the preceding claims, **characterised in that** the protective elements (3) are designed to be overlapping.

7. Device according to one of the preceding claims, **characterised in that** a length is a multiple of a width of a protective element (3).

8. Device according to one of the preceding claims, **characterised in that** the protective skin (2, 3) and/or the net (9), weave and/or lattice is essentially sheet-like.

9. Device according to one of the preceding claims, **characterised in that** are least one longitudinal edge of the protective skin (2, 3) or sheet (3) is fixed to the net (9), weave and/or lattice.

10. Device according to one of the preceding claims, **characterised in that** at least one pivot line of the protective skin (2) is essentially horizontal.

11. Device according to one of the preceding claims, **characterised in that** restoring means (7) are provided for restoring the pivoted out protective skin (2, 3) into the position of rest.

12. Device according to one of the preceding claims, **characterised in that** the pivot line is arranged on an edge area of the protective skin (2, 3) or protective elements (3).

13. Device according to one of the preceding claims, **characterised in that** the restoring means (7) comprise at least one fixing element (7) for additionally fixing the protective skin (2, 3) to the support unit (1, 8, 9, 10,11,12).

14. Device according to one of the preceding claims, **characterised in that** the support unit (1, 8, 9, 10,11,12) comprises a support device (8, 9, 11, 12) arranged on at least one support element (10) for supporting the protective skin (2, 3).

15. Device according to one of the preceding claims, **characterised in that** the protective skin (2, 3) is fixed at least partly to the support device (8, 9, 11, 12) by a thread (7), yarn, cable and/or wire.

16. Device according to one of the preceding claims, **characterised in that** the protective skin (2, 3) is made partly from a light-permeable material.

17. Device according to one of the preceding claims, **characterised in that** the protective skin (2, 3) is designed to be roof-like.

18. Method for producing a device according to one of the preceding claims, **characterised in that** on a first support, consisting of a net (9), weave, stitchable lattice and/or tightening elements such as tightening wires, tightening laces, a first untensioned protective element (3) is fixed and afterwards the first support is fixed onto a second support comprising a second untensioned protective element (3), consisting of a net (9), weave, stitchable lattice and/or tightening elements such as tightening wires, tightening laces, so that the protective elements are fixed pivotably to enable pivoting under the effect of wind power from a position of rest on the respective support.

19. Method according to claim 18, **characterised in that** at least the first support (9) is stitched onto the first protective element (3) and the second support (9) onto the second protective element (3) and/or a support (9) with a protective element (3) onto another support (9) with protective element (3).

## Revendications

1. Dispositif de protection contre les intempéries destiné à protéger des cultures spéciales (4) de production végétale sensibles à l'humidité ou au soleil, comportant au moins un film protecteur (2) largement étanche à l'eau fixé sur une unité de support (1, 8, 9, 10, 11, 12), le film protecteur (2, 3) étant souple et lâche et étant fixé au moins en partie de manière orientable sur l'unité de support (1, 8, 9, 10, 11, 12) afin de pouvoir être orienté par la force du vent à partir d'une position de repos,
**caractérisé en ce qu'**il est prévu un dispositif de support qui comprend un filet (9), treillis, grillage pouvant être cousu et/ou des éléments de fixation tels que des câbles de fixation et des cordons de fixation et qui peut être réalisé en tant que support pour le film protecteur.

2. Dispositif selon la revendication 1,
**caractérisé en ce que** le film protecteur (2) est fixé, par ex. cousu ou collé, sur le filet (9), treillis et/ou grillage.

3. Dispositif selon l'une des revendications précédentes,
**caractérisé en ce que** le film protecteur (2) est réalisé au moins en partie à la façon d'une girouette.

4. Dispositif selon l'une des revendications précédentes,
**caractérisé en ce que** le film protecteur (2) comprend plusieurs éléments de protection (3) au moins en partie orientables.

5. Dispositif selon l'une des revendications précédentes,
**caractérisé en ce que** plusieurs éléments de protection (3) sont réalisés à chaque fois au moins partiellement sous la forme de girouettes.

6. Dispositif selon l'une des revendications précédentes,
**caractérisé en ce que** les éléments de protection (3) sont agencés de manière recouvrante.

7. Dispositif selon l'une des revendications précédentes,
**caractérisé en ce qu'**une longueur est un multiple d'une largeur d'un élément de protection (3).

8. Dispositif selon l'une des revendications précédentes,
**caractérisé en ce que** le film protecteur (2, 3) et/ou le filet (9), treillis et/ou grillage sont essentiellement en forme de bande.

9. Dispositif selon l'une des revendications précédentes,
**caractérisé en ce qu'**au moins un bord longitudinal du film protecteur (2, 3) ou de la bande (3) est fixé au filet (9), treillis et/ou grillage.

10. Dispositif selon l'une des revendications précédentes,
**caractérisé en ce qu'**au moins une ligne de pivotement du film protecteur (2) s'étend de façon essentiellement horizontale.

11. Dispositif selon l'une des revendications précédentes,
**caractérisé en ce qu'**il est prévu des moyens de rappel (7) destinés à rappeler dans la position de repos le film protecteur (2, 3) pivoté vers l'extérieur.

12. Dispositif selon l'une des revendications précédentes,
**caractérisé en ce que** la ligne de pivotement est agencée sur une zone de bord du film protecteur (2, 3) ou des éléments de protection (3).

13. Dispositif selon l'une des revendications précédentes,
**caractérisé en ce que** les moyens de rappel (7) comportent au moins un élément de fixation (7) pour la fixation supplémentaire du film protecteur (2, 3) sur l'unité de support (1, 8, 9, 10, 11, 12).

14. Dispositif selon l'une des revendications précédentes,
**caractérisé en ce que** l'unité de support (1, 8, 9, 10, 11, 12) comporte un dispositif de support (8, 9, 11, 12) agencé sur au moins un élément de support (10) afin de supporter le film protecteur (2, 3).

15. Dispositif selon l'une des revendications précédentes,
**caractérisé en ce que** le film protecteur (2, 3) est au moins en partie fixé sur le dispositif de support (8, 9, 11, 12) au moyen d'un fil (7), d'une ficelle, d'une corde et/ou d'un câble.

16. Dispositif selon l'une des revendications précédentes,
**caractérisé en ce que** le film protecteur (2, 3) est au moins en partie fabriqué dans un matériau translucide.

17. Dispositif selon l'une des revendications précédentes,
**caractérisé en ce que** le film protecteur (2, 3) est réalisé en forme de toit.

18. Procédé destiné à la fabrication d'un dispositif selon l'une des revendications précédentes,
**caractérisé en ce que** sur un premier support, constitué d'un filet (9), treillis, grillage pouvant être cousu et/ou d'éléments de fixation tels que des câbles de fixation et des cordons de fixation, il est fixé un premier élément de protection (3) souple et lâche et le premier support est ensuite fixé sur un second support comprenant un second élément de protection (3) souple et lâche, support constitué d'un filet (9), treillis, grillage pouvant être cousu et/ou d'éléments de fixation tels que des câbles de fixation et des cordons de fixation, de telle sorte que les éléments de protection soient fixés de manière orientable sur le support correspondant afin de pouvoir être pivotés par la force du vent à partir d'une position de repos.

19. Procédé selon la revendication 18,
**caractérisé en ce qu'**au moins le premier support (9) est cousu sur le premier élément de protection (3) et le deuxième support (9) sur le deuxième élément de protection (3) et/ou un support (9) avec élément de protection (3) sur un autre support (9) avec élément de protection (3).
